# EUROPÄISCHE PATENTSCHRIFT

(11) **EP 0 922 823 B1**
(45) Veröffentlichungstag und Bekanntmachung des Hinweises auf die Patenterteilung: **11.02.2004**
(21) Anmeldenummer: 98122612.9
(22) Anmeldetag: 27.11.1998
(51) Int. Cl.: E05B 49/00, G06K 7/00

(54) **Vorrichtung und Verfahren zur Zugangsberechtigungsprüfung**
Means and method for checking an access authorisation
Dispositif et procédé pour vérifier une autorisation d'accès

(30) Priorität: 10.12.1997 DE 19754712; 20.04.1998 DE 19817577
(43) Veröffentlichungstag der Anmeldung: 16.06.1999
(73) Patentinhaber: Delphi Automotive Systems Deutschland GmbH, D-42369 Wuppertal (DE)
(72) Erfinder: Petsching, Wilfried, 51702 Bergneustadt (DE); Marquart, Michael, 59192 Bergkamen (DE); Schenk, Christoph, 51688 Wipperfürth (DE); Seifert, Wolfgang, 51647 Gummersbach-Lantenbach (DE)
(74) Vertreter: COHAUSZ & FLORACK

(56) Entgegenhaltungen:
- EP-A- 0 502 567
- US-A- 4 737 784
- US-A- 4 763 121
- US-A- 5 552 641

## Beschreibung

Die Erfindung betrifft eine Vorrichtung zur Zugangsberechtigungsprüfung, insbesondere für Schließeinrichtungen für Fahrzeuge, bestehend aus einer zugangsseitigen Steuereinrichtung und einer benutzerseitigen Schlüsseleinrichtung, die miteinander im bidirektionalen Datenaustausch stehen, wobei die Schlüsseleinrichtung ein Identifikationselement aufweist, wobei die Schlüsseleinrichtung eine Gleichspannungsquelle aufweist, deren Ladungszustand von einer Überwachungseinrichtung erfaßbar ist, und wobei die Schlüsseleinrichtung erste Mittel zum Umschalten des Sendezustandes zwischen einem die Gleichspannung nutzenden (Aktiv) Betrieb und einem die Gleichspannung nicht nutzenden (Passiv) Betrieb enthält, die beim Absinken des Ladezustands unterhalb eines vorgebbaren Schwellenwertes die Betriebsart der Schlüsseleinrichtung umschalten sowie ein hierauf gerichtetes Verfahren.

Vorrichtungen bzw. Verfahren der eingangs genannten Art sind aus der Praxis bekannt. Bei solchen herkömmlichen Identifikationssystemen, die beispielsweise aus dem Bereich der Schließeinrichtungen für Fahrzeuge verwendet werden, erfolgt eine bidirektionale Datenkommunikation zwischen der zugangsseitigen Steuereinrichtung und der benutzerseitigen Schlüsseleinrichtung. Die benutzerseitige Schlüsseleinrichtung beinhaltet ein Identifikationselement (CID), beispielsweise einen Transponder. Dabei weist das Identifikationselement zwei Betriebsarten auf, nämlich den sog. Aktiv-Betrieb, bei dem im Sendefall mittels einer in der Schlüsseleinrichtung vorgesehenen Gleichspannungsquelle (Batterie) sowohl die Trägerfrequenz als auch die Modulation der Daten selbst erfolgt. Demgegenüber ist der Passiv-Betrieb des Identifikationselementes dadurch gekennzeichnet, daß nur die Modulation der Daten vom CID aus erfolgt, jedoch das Trägerfeld zur Erzeugung der Trägerfrequenz von der Steuereinrichtung aus aufgebaut wird. Der Aktiv-Betrieb unter Zuhilfenahme der Batterie verfügt über eine sehr viel größere Reichweite als der Passiv-Betrieb. Daher wird im Normalbetrieb der Aktivmodus verwendet, während der Passiv-Betrieb vorgezogen wird für Notfunktionen bzw. interne Schreibvorgänge des Identifikationselementes. Bei dem bekannten System erfolgt ein Übergang vom Aktiv- zum Passiv-Betrieb dann, wenn die Spannung der Gleichstromquelle unterhalb eines zulässigen Schwellenwertes abgesunken ist, wobei die Umschaltung in der Schlüsseleinrichtung erfolgt.

Bei einer solchen Betriebsweise kann es aufgrund von Schalthysterese-Effekten zu Uneindeutigkeiten in der Betriebsweise kommen.

Ein anderes Verfahren zur Prüfung der Nutzungsberechtigung für Zugangskontrolleinrichtungen ist aus der DE 195 23 009 A1 bekannt. Hierbei werden zur gegenseitigen Authentifizierung von Steuereinrichtung und Schlüsseleinrichtung nach einem geheimen Schlüssel codierte Benutzercodeinformationen bidirektional ausgetauscht. Dabei wird zunächst eine in der Steuereinrichtung erzeugte und von dort zur Schlüsseleinrichtung übertragene unverschlüsselte Zahlenfolge mit einer in der Schlüsseleinrichtung invers verschlüsselten von der Steuereinrichtung gesendeten verschlüsselten Information verglichen und bei mangelnder Übereinstimmung die Berechtigungsprüfung abgebrochen.

Ein weiteres Verfahren zur Nutzungsberechtigung für Zugangskontrolleinrichtungen ist aus der DE 196 22 721 bekannt. Hierbei geht es um das Problem, daß auch nach dem Ersatz eines (defekt gewordenen) Steuergerätes durch ein weiteres Steuergerät die vorhandenen Schlüsseleinrichtungen weiter verwendet werden können. Dazu ist vorgesehen, daß bei Ersetzen des defekten Steuergerätes durch ein weiteres Steuergerät zunächst der Benutzercode (PIN Code) des defekten Steuergerätes zur Schlüsseleinrichtung übertragen wird, wodurch in der Schlüsseleinrichtung nach Prüfung der Übereinstimmung des empfangenen Benutzercodes mit einem angelernten Benutzercode der geheime Code mindestens teilweise zum Überschreiben freigegeben wird und daß anschließend durch Übertragen des für das weitere Steuergerät geltenden geheimen Codes die Schlüsseleinrichtung an den für das weitere Steuergerät geltenden geheimen Code angelernt wird.

Davon ausgehend liegt der Erfindung die Aufgabe zugrunde, die Betriebssicherheit eines Systems der eingangs genannten Art zur Zugangsberechtigungsprüfung zu verbessern.

Diese Aufgabe wird erfindungsgemäß dadurch gelöst, daß die Steuereinrichtung weitere Umschaltmittel für die Umschaltung der Betriebsart von Passiv auf Aktiv bzw. umgekehrt aufweist, die den ersten Umschaltmitteln übergeordnet sind bzw. gemäß der verfahrensgemäßen Komponente dadurch, daß die Anforderung für die Betriebsarten-Umschaltung von der zugangsseitigen Steuereinrichtung aus erfolgt, welche in jedem Sendedatensatz des Identifikationselementes eine Information über den Ladezustand erhält und wobei der Umschaltbefehl der schlüsseleinrichtungsseitigen Umschaltung übergeordnet ist.

Gemäß der von der Erfindung vorgeschlagenen Lösung erfolgt die Umschaltung der Betriebsarten des Identifikationselementes ausgehend von einem entsprechenden Befehl in der Steuereinrichtung, wobei maßgeblich für die Steuerung der innerhalb der Schlüsseleinrichtung erfaßte Ladezustand der Gleichspannungsquelle ist. Die Erfindung macht sich dabei zunutze, daß in jedem Sendedatensatz des Identifikationselementes unabhängig vom Passiv- bzw. Aktiv-Betrieb eine Information über den Ladezustand mit übertragen wird. Sinkt nun die Ladespannung unter einen zugestandenen Schwellenwert, so kann von der Steuereinrichtung ausgehend die Umschaltung des Betriebszustandes erfolgen. Dabei überwacht das Identifikationselement (CID) den Zustand der Batterie ständig und prüft, ob eine noch ausreichend vorhandene Restkapazität das Arbeiten im Aktiv-Betrieb möglich macht. Im Falle einer nicht ausreichenden Kapazität der Batterie, schaltet das Identifikationselement automatisch in den Passiv-Betrieb um und ignoriert alle Befehle für den Aktiv-Betrieb. Befehle mit der Umschaltungsanforderung für Passiv-Betrieb werden unabhängig vom Zustand der Batterie durchgeführt. Somit zeichnet sich das erfindungsgemäße System dadurch aus, daß der automatischen Umschaltung seitens der Schlüsseleinrichtung durch die Umschaltung von der Steuereinrichtung ausgehend vorgegriffen wird, wodurch sich die Eindeutigkeit des Betriebsverhaltens und die Funktionalität des Systems wesentlich verbessert.

Ein weiterer Vorteil dieser Lösung besteht darin, daß für die Betriebs- und Datensicherheit kritische Vorgänge, wie beispielsweise Identifikationselement-interne Speicherzugriffe wie Beschreiben, Anlernen oder Umprogrammieren nur im Passiv-Betrieb, also mit geringer Reichweite, zugelassen werden. Auf diese Weise lassen sich auch produktions- und servicebedingte Inbetriebmaßnahmen und Programmierungen selbst in gestörter Umgebung durchführen, da sich Störungen auf geringen Reichweiten kaum negativ bemerkbar machen. Es bietet sich darüber hinaus die Möglichkeit, für jede Betriebsart unterschiedliche Befehle zu definieren.

Die Erfindung wird im folgenden anhand einer Zeichnung näher erläutert. Dabei zeigen:
- Fig. 1: ein Blockschaltbild des Aufbaus einer erfindungsgemäßen Vorrichtung zur Zugangsberechtigungsprüfung nach Ausführungsbeispiel
- Fig. 2: ein Flußdiagramm zur Erläuterung der Funktionsweise.

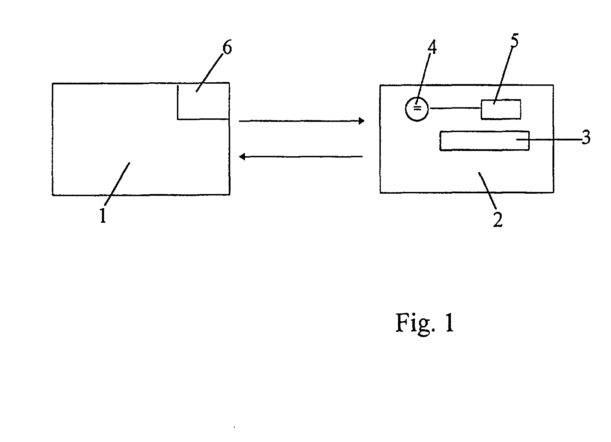

Fig. 1 zeigt eine zugangsseitige Steuereinrichtung 1 einerseits und eine benutzerseitige Schlüsseleinrichtung 2 andererseits, die miteinander im bidirektionalen drahtlosen Datenaustausch stehen. Innerhalb der Schlüsseleinrichtung 2 ist eine Gleichspannungsquelle 4 vorgesehen, deren Ladezustand von einer Überwachungseinrichtung 5 überprüft wird. Die Überwachungseinrichtung 5 arbeitet auf einen Umschalter. Darüber hinaus ist innerhalb der benutzerseitigen Schlüsseleinrichtung 2 ein Identifikationselement 3 vorgesehen, welches vom Umschalter gesteuert in zwei Betriebsarten "aktiv" und "passiv" betreibbar ist.

Innerhalb der zugangsseitigen Steuereinrichtung 1 ist eine weitere Umschalteinrichtung 6 vorgesehen.

Die Überwachungseinrichtung 5 stellt den Ladezustand der Gleichspannungsquelle 4 fest und gibt je nach Ladezustand, der mit einem vorgebbaren Schwellenwert verglichen wird, ein Ausgangssignal zur Ansteuerung des Aktiv- oder des Passiv-Betriebsmodus des Identifikationselementes 3 aus.

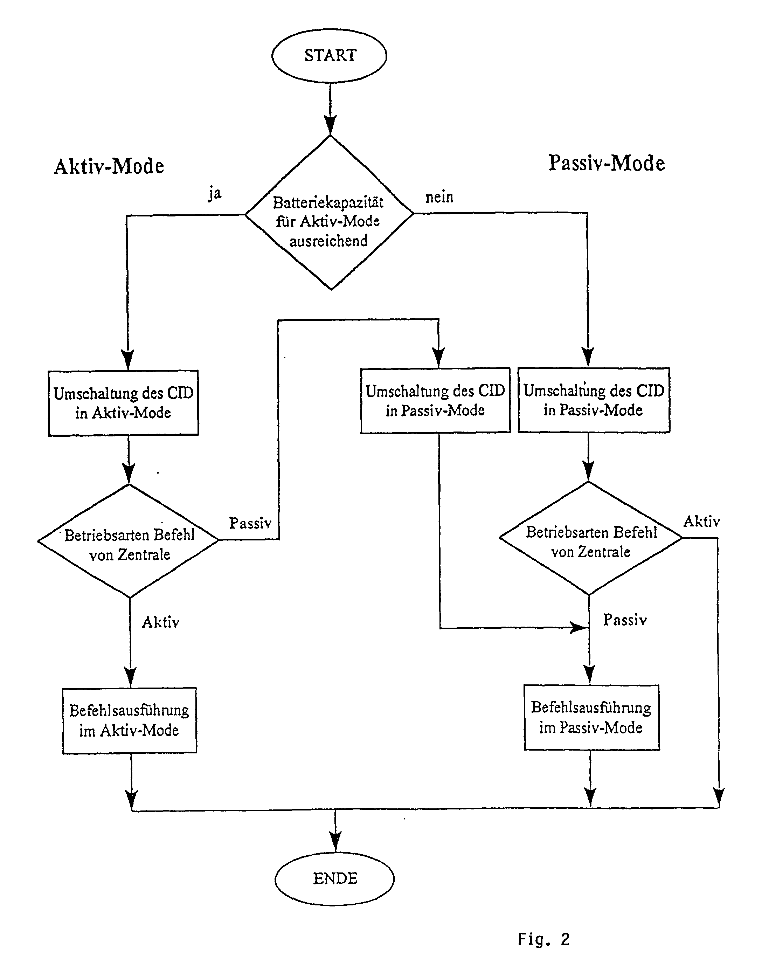

Die Betriebsweise wird im folgenden anhand des Flußdiagramms nach Fig. 2 näher erläutert:

Zu Beginn der Operation stellt zunächst die Überwachungseinrichtung 5 fest, ob der Ladezustand der Gleichspannungsquelle 4, d.h. die Batteriekapazität für den Aktiv-Mode ausreichend ist. Wenn dies nicht der Fall ist, geht das Identifikationselement 3 in den Passiv-Mode über.

Wenn im Passiv-Mode gearbeitet werden muß, liegt die Betriebsart fest.

Wenn andererseits die Batteriekapazität für den Aktiv-Mode ausreichend ist, schaltet sich das CID-Element in den Aktiv-Mode um.

Sobald die von dem Identifikationselement 3 empfangenen Daten jedoch die Information "Batterie leer" beinhalten, erfolgt von der Steuereinrichtung 1 aus die Umschaltung des Identifikationselementes CID in den Passiv-Mode.

Eine steuergerätseitige Betriebsarten-Anforderung führt nur dann zu einer Betriebsarten-Umschaltung der Schlüsseleinrichtung, wenn sich diese zuvor anhand der Batteriekapazität für den Aktiv-Mode entschieden hat (s. Fig. 2).

Eine Entscheidungshilfe für die Betriebsartenwahl der Steuereinrichtung liefert die Batteriezustandsinformation im Sendedatensatz der Schlüsseleinrichtung.

Die erfindungsgemäße Lösung beschränkt sich keinesfalls auf eine Zugangsberechtigungsprüfung für Schließeinrichtungen für Fahrzeuge. Vielmehr läßt sie sich auch anwenden für jegliche andere Arten von berührungslosen Zugangsberechtigungs- und Registriersysteme.

## Patentansprüche

1. Vorrichtung zur Zugangsberechtigungsprüfung, insbesondere für Schließeinrichtungen für Fahrzeuge, bestehend aus
- einer zugangsseitigen Steuereinrichtung (1) und einer benutzerseitigen Schlüsseleinrichtung (2), die miteinander im bidirektionalen Datenaustausch stehen,
- wobei die Schlüsseleinrichtung (2) ein Identifikationselement (3) aufweist,
- wobei die Schlüsseleinrichtung (2) eine Gleichspannungsquelle (4) aufweist, deren Ladungszustand von einer Überwachungseinrichtung (5) erfaßbar ist, und
- wobei die Schlüsseleinrichtung (2) erste Mittel zum Umschalten des Sendezustandes zwischen einem die Gleichspannung nutzenden (Aktiv) Betrieb und einem die Gleichspannung nicht nutzenden (Passiv) Betrieb enthält, die beim Absinken des Ladezustands unterhalb eines vorgebbaren Schwellenwertes die Betriebsart der Schlüsseleinrichtung (2) umschalten,
**dadurch gekennzeichnet, daß** die Steuereinrichtung (1) weitere Umschaltmittel (6) für die Umschaltung der Betriebsart von Passiv auf Aktiv bzw. umgekehrt aufweist, die den ersten Umschaltmitteln übergeordnet sind.

2. Verfahren zur Prüfung der Zugangsberechtigung, insbesondere für Schließeinrichtungen für Fahrzeuge, bei dem zwischen einem zugangsseitigen Steuergerät und einer benutzerseitigen, ein Identifikationselement enthaltenden Schlüsseleinrichtung bidirektional Identifikationsund/oder Steuerdaten ausgetauscht werden, wobei in einem ersten Betriebszustand (Aktiv-Betrieb) des Identifikationselementes mittels einer Gleichspannungsquelle die Trägerfrequenz sowie die Modulation der Sendedaten erfolgt und in einer zweiten Betriebsweise (Passiv-Betrieb) nur die Modulation der Daten vom Identifikationselement erzeugt wird, wobei die Umschaltung zwischen den beiden Betriebsarten in Abhängigkeit von dem Ladezustand der Gleichspannungsquelle erfolgt,
**dadurch gekennzeichnet, daß** die Entscheidung für die Betriebsarten-Umschaltung von der zugangsseitigen Steuereinrichtung aus erfolgt, welche in jedem Sendedatensatz des Identifikationselementes eine Information über den Ladezustand enthält und wobei der Umschaltbefehl der schlüsseleinrichtungsseitigen Umschaltung übergeordnet ist.

3. Verfahren nach Anspruch 2,
**dadurch gekennzeichnet, daß** für den Betrieb im ersten Betriebszustand (Aktiv-Betrieb) und im zweiten Betriebszustand (Passiv-Betrieb) unterschiedliche Befehlssätze verwendet werden.

## Claims

1. Apparatus for access authorisation testing, in particular for locking devices for vehicles, consisting of
- a control device (1) on the access side and a key device (2) on the user side, which are in bidirectional data exchange with each other,
- wherein the key device (2) comprises an identification element (3),
- wherein the key device (2) comprises a d.c. voltage source (4) whose state of charge can be detected by a monitoring device (5), and
- wherein the key device (2) includes first means for switching the state of transmission between an (active) mode which uses the d.c. voltage and a (passive) mode which does not use the d.c. voltage, which means, when the state of charge drops below a presettable threshold value, switch the mode of the key device (2),
**characterised in that** the control device (1) comprises additional switching means (6) for switching the mode from passive to active or vice versa, which override the first switching means.

2. Method for testing for access authorisation, in particular for locking devices for vehicles, in which identification and/or control data are exchanged bidirectionally between a control device on the access side and a key device containing an identification element on the user side, wherein in a first mode (active mode) of the identification element the carrier frequency and modulation of the transmission data are effected by means of a d.c. voltage source, and in a second mode (passive mode) only modulation of the data is produced by the identification element, wherein switching between the two modes is effected as a function of the state of charge of the d.c. voltage source, **characterised in that** the decision in favour of mode switching is made from the control device on the access side, which in each transmission data record of the identification element contains information on the state of charge and wherein the switching command overrides switching by the key device.

3. Method according to claim 2, **characterised in that** different command sets are used for operation in the first mode (active mode) and in the second mode (passive mode).

## Revendications

1. Dispositif pour vérifier l'autorisation d'accès, en particulier pour des systèmes de fermeture pour des véhicules, comprenant
- un système de commande (1) côté accès et un système de code (2) côté utilisateur, qui sont en liaison dans le cadre d'un échange de données bidirectionnel,
- le système de code (2) présentant un élément d'identification (3),
- le système de code (2) présentant une source de tension continue (4), dont l'état de charge peut être détecté par un système de contrôle (5) et
- le système de code (2) contenant des premiers moyens pour la commutation de l'état d'émission entre une exploitation utilisant la tension continue (active) et une exploitation n'utilisant pas la tension continue (passive), qui commute le mode d'exploitation du système de code (2) lors de l'abaissement de l'état de charge au-dessous d'une valeur seuil prédéterminée,
**caractérisé en ce que** le système de commande (1) présente d'autres moyens de commutation (6) pour la commutation du mode d'exploitation de passif en actif et inversement, qui sont prioritaires sur les premiers moyens de commutation.

2. Procédé pour vérifier l'autorisation d'accès, en particulier pour des systèmes de fermeture pour des véhicules, selon lequel des données d'identification et/ou de commande sont échangées sur un plan bidirectionnel entre un appareil de commande côté accès et un système de code côté utilisateur et contenant un élément d'identification, la fréquence porteuse ainsi que la modulation des données d'émission intervenant dans un premier état de service (exploitation active) de l'élément d'identification au moyen d'une source de tension continue et seule la modulation des données étant générée par l'élément d'identification dans un second mode d'exploitation (exploitation passive), la commutation entre les deux modes d'exploitation s'effectuant en fonction de l'état de charge de la source de tension continue,
**caractérisé en ce que** la décision de la commutation des modes d'exploitation s'effectue à partir du système de commande côté accès, qui contient une information sur l'état de charge dans chaque ensemble de données d'émission de l'élément d'identification et l'instruction de commutation étant prioritaire sur la commutation côté système de code.

3. Procédé selon la revendication 2,
**caractérisé en ce que** différents ensembles d'instruction sont utilisés dans le premier état de service (exploitation active) et dans le second état de service (exploitation passive).
